# EUROPEAN PATENT APPLICATION

(11) **EP 4 848 225 A1**
(43) Date of publication of application: **02.12.2026**
(21) Application number: 25744949.6
(22) Date of filing: 17.01.2025
(51) Int. Cl.: G06V 10/774, G06T 7/00, G06T 7/143, G06V 10/82, G06V 10/778

(54) **IMAGE PROCESSING APPARATUS, IMAGE PROCESSING METHOD, AND IMAGE PROCESSING PROGRAM**

(30) Priority: 26.01.2024 JP 2024010605; 08.04.2024 JP 2024062424
(71) Applicant: Kyushu Institute of Technology, Kitakyushu-shi Fukuoka 804-8550 (JP)
(72) Inventor: TOKUNAGA, Terumasa, Kitakyushu-shi, Fukuoka 804-8500 (JP); NAKANISHI, Keiichi, Kitakyushu-shi, Fukuoka 804-8500 (JP)
(74) Representative: Zimmermann & Partner Patentanwälte mbB
(86) International application number: PCT/JP2025/001353
(87) International publication number: WO 2025/159020

(57) **Abstract**

An image processing apparatus is provided that improves learning accuracy by utilizing global inference that extracts a feature of an entire image to execute inference, in addition to local inference that executes semi-supervised learning using small images having cut-out portions of the image. An image processing apparatus 100 is an image processing apparatus 100 for performing region division on an image to be processed using a neural network, and includes a global inference unit 130 that extracts a global feature of an image to execute inference, a local inference unit 140 that extracts a local feature of the image to execute inference, and a training unit 120 that executes semi-supervised learning in each of the global inference unit 130 and the local inference unit 140 using inference results of both the global inference unit 130 and the local inference unit 140.

## Description

### TECHNICAL FIELD

The present invention relates to an image processing apparatus, an image processing method, and an image processing program for executing region division for an image using a neural network.

### BACKGROUND ART

In visual inspection of a product in a factory or medical diagnosis using image data in a medical site, it is important to accurately identify the shape and size of a region containing abnormalities. In the field of computer vision, image processing techniques for achieving accurate region division in pixel unit have been studied for a long time. In particular, in recent years, for various problems, a region division technique using a deep neural network (DNN) is achieving practical performance. However, in the method based on supervised learning, a large number of region mask images are required for DNN training. In the creation of the region mask image for training, it is necessary to manually label all pixels in the image, and work cost is high. In addition, in order to create an accurate region mask image, a high level of expertise is required for an image for which region division is to be executed. In this way, in the image region division technique using the DNN, training dataset creation requires a lot of labor and cost, and technical innovation capable of simplifying this process is required.

Patent Literature 1 by one of the inventors of the present application discloses an image processing and analysis apparatus for executing segmentation for an image to be processed using a neural network, the image processing and analysis apparatus including a classifier using a trained model that has been subjected to semi-supervised learning to output a segmented image when the image to be processed is received, in which a data set used for the semi-supervised learning includes a plurality of foreground patch images having a cut-out portion of the image and assigned a positive label, a plurality of background patch images having a cut-out portion of the image and assigned a negative label, and a plurality of unlabeled patch images having a cut-out portion of the image. According to this image processing and analysis apparatus, the load of image annotation work required for semi-supervised learning is reduced, and a training dataset can be easily created.

### CITATION LIST

### PATENT LITERATURE

Patent Literature 1: WO2023/189662

### SUMMARY OF INVENTION

### TECHNICAL PROBLEM

An object of the present invention is to provide an image processing apparatus that improves learning accuracy by utilizing global inference that extracts features of an entire image to execute inference, in addition to local inference that executes semi-supervised learning using a plurality of small images (namely patch images) having a cut-out portion of the image and assigned labels, and a plurality of unlabeled small images having a cut-out portion of the image.

### SOLUTION TO PROBLEM

An image processing apparatus according to the present invention is an image processing apparatus for performing region division on an image to be processed using a neural network, the image processing apparatus including: a global inference unit configured to extract a global feature of an image to execute inference; a local inference unit configured to extract a local feature of the image to execute inference; and a training unit configured to execute semi-supervised learning in each of the global inference unit and the local inference unit using inference results of both the global inference unit and the local inference unit.

An image processing method according to the present invention is an image processing method for performing region division on an image to be processed using a neural network, the image processing method including: a global inference step of extracting a global feature of an image to execute inference; a local inference step of extracting a local feature of the image to execute inference; and a training step of executing semi-supervised learning in each of the global inference step and the local inference step using inference results of both the global inference step and the local inference step.

### ADVANTAGEOUS EFFECTS OF INVENTION

According to the present invention, it is possible to improve the learning accuracy by utilizing the global inference that extracts features of an entire image to execute inference, in addition to the local inference that cuts out the small images from the image and that executes inference in each small image.

### BRIEF DESCRIPTION OF DRAWINGS

[FIG. 1] FIG. 1 is a block diagram showing a configuration of an image processing apparatus in a training phase according to a first embodiment.
[FIG. 2] FIG. 2 is a flowchart showing an operation of the image processing apparatus in the training phase according to the first embodiment.
[FIG. 3] FIG. 3 is a diagram showing a display example in which training data before annotation work according to the first embodiment is displayed.
[FIG. 4] FIG. 4 is a diagram showing an example of the annotation work according to the first embodiment.
[FIG. 5] FIG. 5 is a diagram showing a labeled point generated by annotation according to the first embodiment.
[FIG. 6] FIG. 6 is a diagram showing an unlabeled point generated by automatic generation according to the first embodiment.
[FIG. 7] FIG. 7 is a diagram showing a small image generated by cutting out a part of an image according to the first embodiment.
[FIG. 8] FIG. 8 is a block diagram showing a configuration of a global inference unit according to the first embodiment.
[FIG. 9] FIG. 9 is a block diagram showing a configuration of a local inference unit according to the first embodiment.
[FIG. 10] FIG. 10 is a block diagram showing a configuration of an image processing apparatus in an inference phase according to the first embodiment.
[FIG. 11] FIG. 11 is a flowchart showing an operation of the image processing apparatus in the inference phase according to the first embodiment.
[FIG. 12] FIG. 12 is a block diagram showing an overall configuration of an image processing system according to a second embodiment.
[FIG. 13] FIG. 13 is a diagram showing a configuration of a head mounted display according to the second embodiment.
[FIG. 14] FIG. 14 is a flowchart showing a flow of processing in an inspection mode of an image processing apparatus according to the second embodiment.
[FIG. 15] FIG. 15 is a diagram showing a display example of the head mounted display according to the second embodiment.
[FIG. 16] FIG. 16 is a flowchart showing a flow of processing in a re-training mode of the image processing apparatus according to the second embodiment.
[FIG. 17] FIG. 17 is a diagram showing a display example of a re-training mode of the head mounted display according to the second embodiment.
[FIG. 18] FIG. 18 is a diagram schematically showing training data according to the second embodiment.
[FIG. 19] FIG. 19 is a flowchart showing a flow of processing in a training mode of the image processing apparatus according to the second embodiment.
[FIG. 20] FIG. 20 is a diagram showing a display example of a training mode of the head mounted display according to the second embodiment.

### DESCRIPTION OF EMBODIMENTS

Hereinafter, embodiments of the present invention will be described. The present invention is not limited to the following embodiments.

### [First Embodiment]

An image processing apparatus according to a first embodiment will be described separately in a training phase and an inference phase.

### <1. Training Phase>

### <1-1. Configuration>

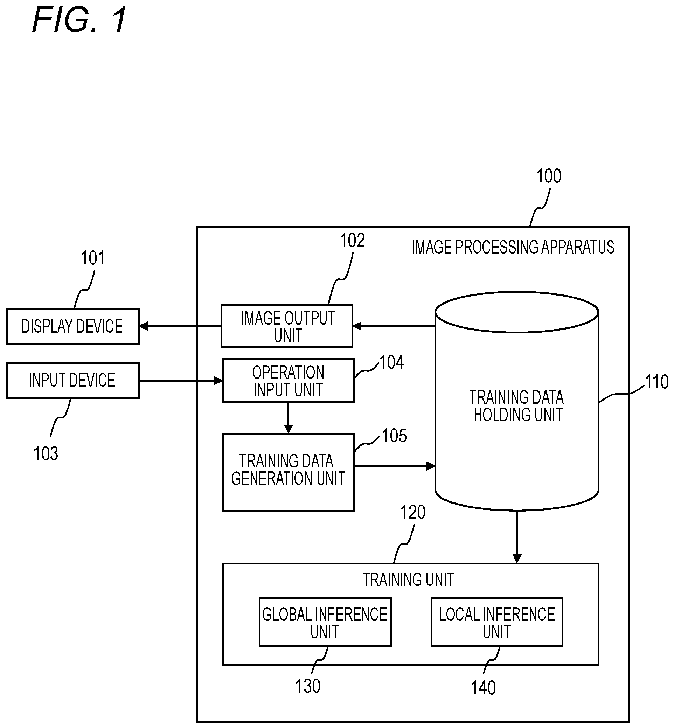

FIG. 1 is a block diagram showing a configuration of an image processing apparatus 100 in the training phase according to the first embodiment. The image processing apparatus 100 includes an image output unit 102 that outputs an image to a display device 101, an operation input unit 104 that receives an input operation using an input device 103 by a user (also referred to as an operator), a training data generation unit 105 that generates training data (namely a training dataset) based on the input operation by the user, a training data holding unit 110 that stores data used for training such as training image data, coordinate information regarding a specific point on the image, and a class label, and a training unit 120 that executes training using the training data stored in the training data holding unit 110. The training unit 120 includes a global inference unit 130 and a local inference unit 140.

The display device 101 is a device that displays an image or the like, such as a display or a tablet. The input device 103 is an input device such as a touch panel for inputting a position on an image displayed on the display device 101 by touching a specific position of the image, a mouse, or a keyboard.

The training data holding unit 110 is a storage medium that holds data, such as an SSD, a hard disk drive, or a memory. The training data holding unit 110 stores a large amount of image data used for training.

The image processing apparatus 100 includes a memory and a processor, and blocks shown inside the image processing apparatus 100 in FIG. 1 are implemented by software in which the memory and the processor operate in cooperation with each other. The blocks may also be implemented as a program that operates on a computer. Not all of the blocks need to be implemented by software, and a part of the blocks may be implemented by hardware.

### <1-2. Operation>

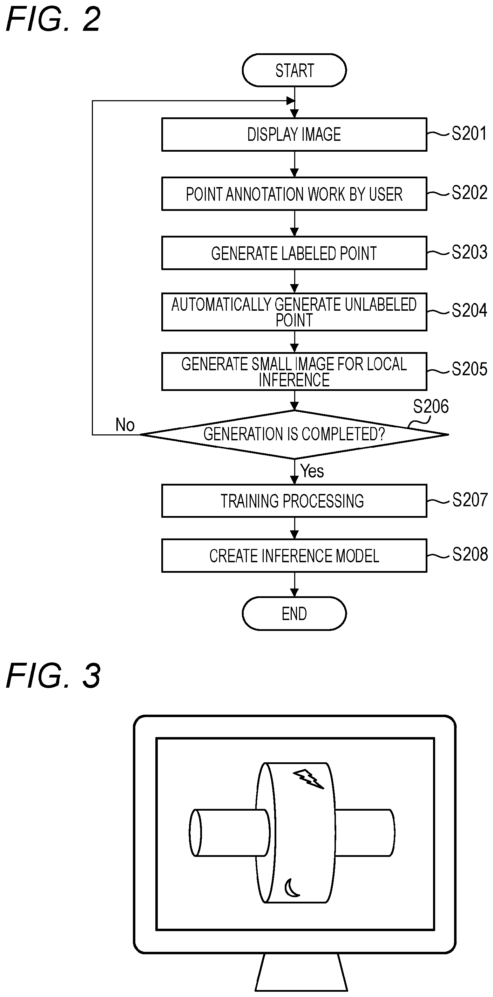

An operation of the image processing apparatus 100 will be described below. The image processing apparatus 100 executes supervised learning or semi-supervised learning using point annotation data generated by a user specifying a point on an image displayed on the display device 101. FIG. 2 is a flowchart showing the operation of the image processing apparatus 100.

The user designates the image data stored in the training data holding unit 110 using the input device 103, so that the image to be annotated is displayed on the display device 101 (step S201). FIG. 3 is a diagram showing a display example in which training data before annotation work is displayed on the display device 101. In FIG. 3, the image to be annotated is an image obtained by capturing an image of a component. The user performs region division to identify an abnormal portion such as a defect on a component. Here, the defect refers to a defect in appearance represented by a scratch, a depression, a deposit such as hair, distortion, or the like. The region division classifies each pixel in the image into a specific class.

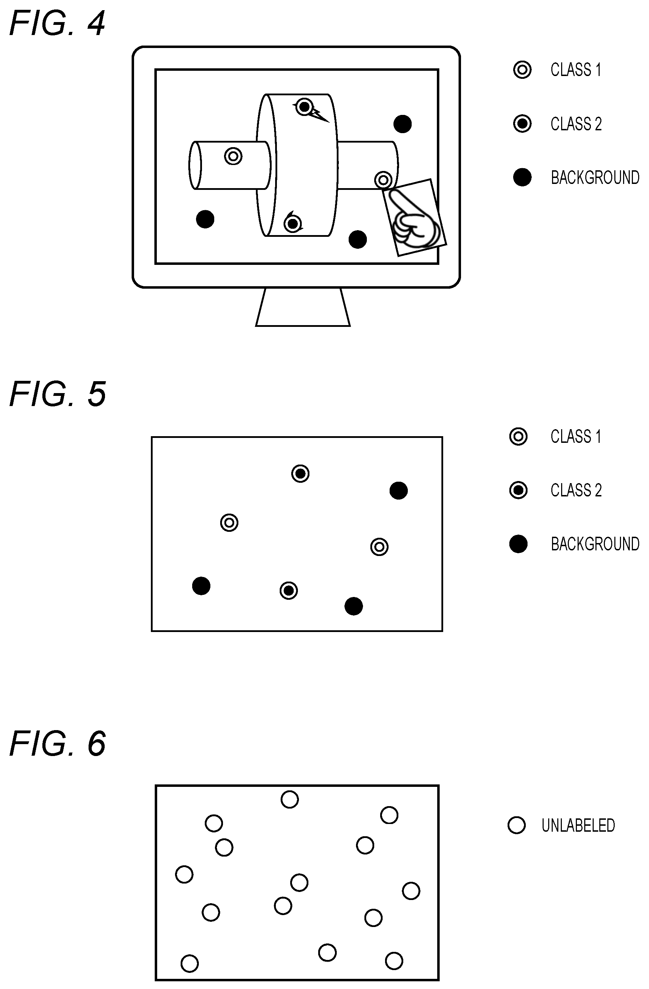

The user performs point annotation work on the image displayed on the display device 101 (step S202). The point annotation work is work of specifying a limited part of pixels on an image and performing labeling. As shown in FIG. 4, the user touches a specific point on the image of the display device 101 using the touch panel that is the input device 103. When a specific point on the image is touched on the display device 101, a mark is displayed at the touched point. Thereafter, the user designates the class label of the point using the input device 103 such as a mouse. The user designates, as the class label, any one of a "class 1" which is a normal region having no defect or the like on the component, a "class 2" which is an abnormal region having a defect or the like on the component, and a "background" indicating a background region which is not the component. The image processing apparatus 100 changes and displays the display form of the mark of the point touched by the user for each class. Three classes are used in the present embodiment. Alternatively, two classes or four or more classes may be used according to the type of image for region division. Alternatively, the user may designate a class label first and then touch a point on the image. In this case, when touched, a mark in a display form corresponding to the class label is displayed on the display device 101.

The operation input unit 104 reads the coordinate information and the class label of the designated point and outputs the coordinate information and the class label to the training data generation unit 105. The training data generation unit 105 generates a labeled point including the received coordinate information of the point and the class label (step S203). FIG. 5 is a diagram showing the generated labeled point. The training data generation unit 105 stores the coordinate information of the labeled point generated by the point annotation work and the class label in the training data holding unit 110 as labeled data.

The training data generation unit 105 automatically generates points at random on the image and acquires coordinate information of the points (step S204). The coordinate information automatically generated by the training data generation unit 105 is an unlabeled point. FIG. 6 is a diagram showing the generated unlabeled point. The unlabeled points are created such that the number of unlabeled points is larger than the number of labeled points. This is because the unlabeled points are automatically generated and can be increased more easily than the labeled points. The training data generation unit 105 stores the coordinate information of the automatically generated unlabeled points in the training data holding unit 110 as training data.

The image, the coordinate information of the labeled point, the class label, and the coordinate information of the unlabeled point that are stored in the training data holding unit 110 are used as training data of the global inference unit 130 in the training unit 120.

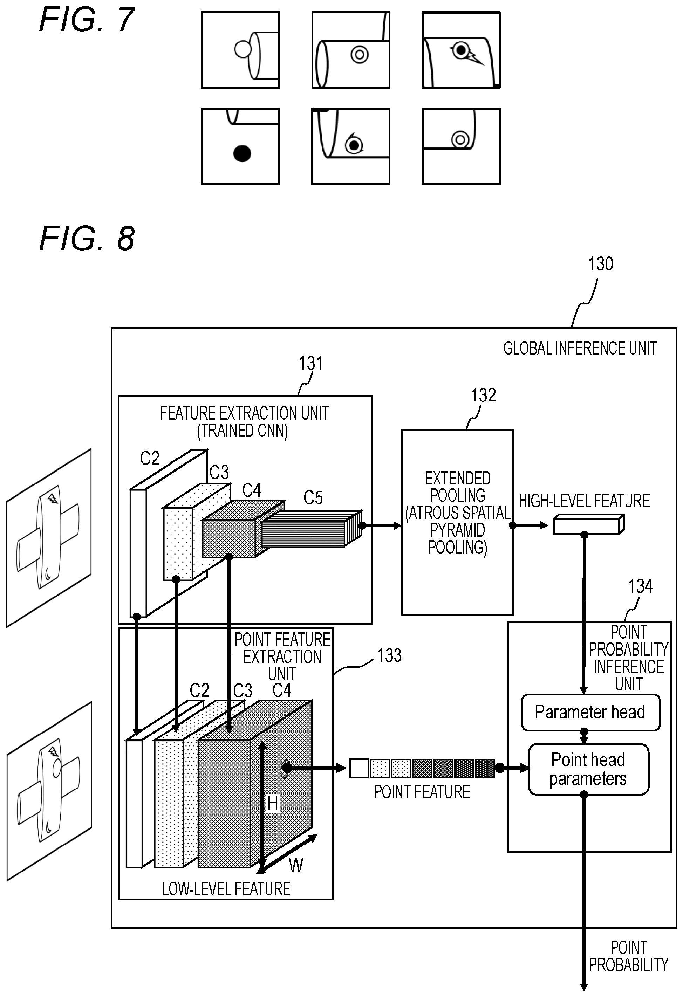

The training data generation unit 105 generates a small image obtained by cutting out a part of the image as training data of the local inference unit 140 in the training unit 120 (step S205). The training data generation unit 105 takes the image stored in the training data holding unit 110, cuts out a part of the image in a predetermined size, centering on the labeled points or the unlabeled points, and generates a small image. FIG. 7 is a diagram showing the generated small image. The generated small images are images having the same shape and the same size. The cut-out small images may overlap each other. Since the image size at the time of cutting differs for each data set, the image size is determined empirically or based on an evaluation value in verification data. In the present embodiment, the shape of the cut-out small image is a quadrangle, but the shape is not limited to a quadrangle, and may be a circle or another shape. The training data generation unit 105 stores the generated small image in the training data holding unit 110 as the training data of the local inference unit 140.

Although the display device 101 has been described by taking a device such as a display or a tablet as an example, the display device 101 is not limited thereto. For example, a head mounted display (HMD) or the like may be used as the display device 101. Although the input device 103 has been described by taking a touch panel, a mouse, and a keyboard as examples, the input device 103 is not limited thereto. For example, a gesture device or the like that detects the movement of the hand of the user and that executes an input instruction by a hand gesture may be used as the input device 103. By using the head mounted display and the gesture device in combination, for example, efficiency of point annotation work can be expected. Specifically, the user can designate the class label by pointing any point with a hand or a finger while viewing the image displayed on the head mounted display. Since point annotation can be executed by such an intuitive operation, improvement in work efficiency can be expected. A configuration example of the head mounted display and the gesture device will be described in detail in a second embodiment.

By the above operation, the training data generation unit 105 completes the generation of the training data for one image. The user executes the same processing on other image data stored in the training data holding unit 110 to generate training data (No in step S206).

When the generation of the training data is completed (Yes in step S206), the training unit 120 executes training using the training data stored in the training data holding unit 110 (step S207). The main components of the training unit 120 are the global inference unit 130, the local inference unit 140, and a cost function including four cost terms, namely L^{g}, L¹, R^{l2}, and R^{con}. Hereinafter, details of each main component of the training unit 120 will be described.

The global inference unit 130 processes global features of an image used as a training dataset. The global inference unit 130 uses the image and the coordinate information of the labeled point that are initially stored in the training data holding unit 110 as input data during training.

FIG. 8 is a block diagram showing a configuration of the global inference unit 130. The global inference unit 130 includes a feature extraction unit 131 implemented by a trained convolutional neural network (CNN), extended pooling 132, a point feature extraction unit 133, and a point probability inference unit 134.

The feature extraction unit 131 extracts feature maps including various hierarchical representations from the received image. The global inference unit 130 uses ResNet-50 as an example of the feature extraction unit 131. ResNet has a structure called a skip connection, and this skip connection can alleviate the vanishing gradient problem. Examples of the extracted hierarchical feature maps include a high-level feature map C5 and a plurality of low-level feature maps C2, C3, and C4. Here, in a feature map Cr, r-1 is the number of times of downsampling. When the height of the received image is H and the width is W, the size of Cr is H/2^{r-1} × W/2^{r-1}. C5 is a feature map output from a layer close to the final layer in the trained CNN. C5 is a high context but has a low resolution. C2, C3, and C4 are obtained by combining the feature maps output from the plurality of initial layers in the trained CNN in the channel direction. C2, C3, and C4 are low contexts but have high resolution. Each of the feature maps C2 to C5 is selected from the layers from which the feature map satisfying the condition described above is extracted among the layers constituting the ResNet-50.

In the present embodiment, a form will be described in which the feature maps C2 to C5 are used. In the feature maps C2 to C5, the number of times of downsampling is 1 to 4 and the height and the width of the image size are 1/2, 1/4, 1/8 and 1/16 of the received image, respectively, but the number of times of downsampling, the image size, and the number of feature maps are not limited to these numbers, and may be different numbers.

The extended pooling 132 is atrous spatial pyramid pooling (ASPP). The extended pooling 132 is a combination of convolution layers, pooling layers, and convolution layers having different dilation rates. The extended pooling 132 extracts high-level features of a plurality of scales using C5 as an input.

The point feature extraction unit 133 upsamples C2, C3, and C4, which are low-level feature maps, and generates an image resized to the same size as the received image. The point feature extraction unit 133 uses bilinear interpolation as an example of upsampling. The point feature is a feature sampled in the channel direction based on any coordinate information from a high-resolution feature map in which low-context information is encoded. The point feature extraction unit 133 samples a feature from the resized feature map in the channel direction according to the received coordinates. The point feature extraction unit 133 outputs the sampled feature as a point feature.

The point probability inference unit 134 converts the point feature output by the point feature extraction unit 133 into a point probability, which is a prediction probability of the point, using a parameter generated based on the high-level features of a plurality of scales output by the extended pooling 132. The point probability is a class probability to which the received coordinate information belongs. The point probability inference unit 134 uses a technique called Implicit PointRend. Implicit PointRend includes two mechanisms of Parameter head and Point head. The Parameter head generates parameters of a weight and a bias for the Point head based on high-level features of a plurality of scales. However, in the Parameter head in the Implicit PointRend in the related art, a target in an image is surrounded by a frame called a bounding box, an object in the bounding box is set as a foreground, an operation of assigning class labels of the foreground and the background to only a part of pixels is executed, and then a parameter for the point head is generated based on a feature in the bounding box of the object detected from the received images. On the other hand, the Parameter head in the point probability inference unit 134 generates a parameter for the Point head based on the received images. The Point head is structurally the same as the multilayer perceptron (MLP). However, unlike a normal MLP, the Point head does not have learnable parameters, and its parameters are received from the Parameter head. Therefore, the Parameter head trains how to generate an appropriate parameter for converting the point feature. The Point head has three layers, the softmax function is used for the last layer, and the ReLU function is used for the other layers.

In this way, the global inference unit 130 infers the point probability, which is the class probability to which the coordinates belong, based on the received image and the coordinate information thereof. The training unit 120 inputs the coordinate information constituting the image to the global inference unit 130 and outputs the point probability of the coordinates.

Next, the local inference unit 140 will be described in detail. The local inference unit 140 processes local features of an image used as a training dataset. The local inference unit 140 trains only small images cut out in an arbitrary size with the coordinates in the image as centers. The local inference unit 140 can use the class probability for the small image as the point probability for the received coordinates using the classification of the small image as the inference of the center class of the small image.

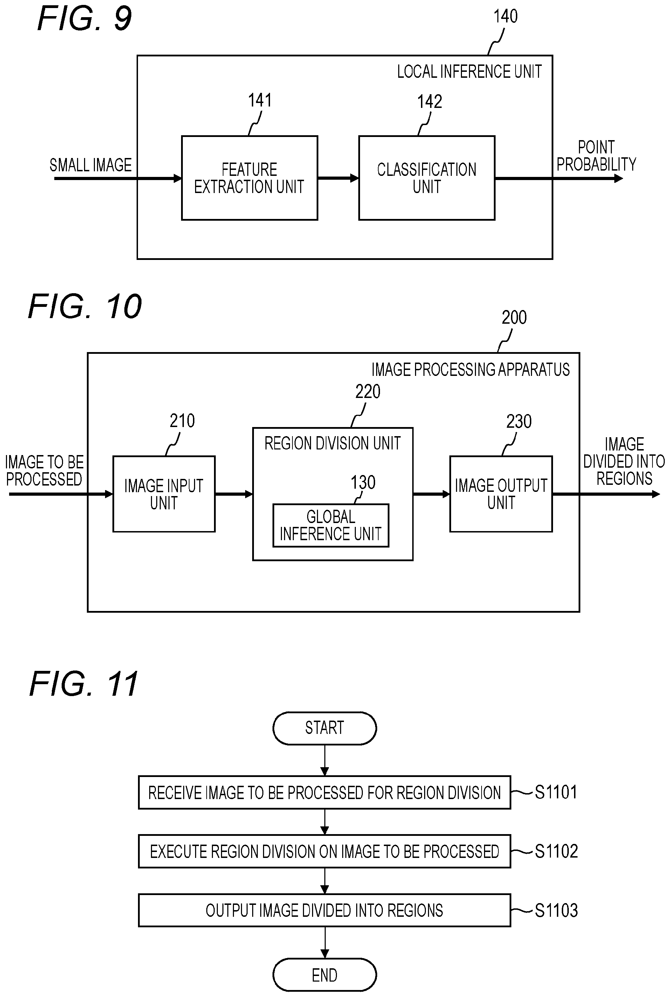

FIG. 9 shows a configuration of the local inference unit 140. The local inference unit 140 includes a feature extraction unit 141 and a classification unit 142. The feature extraction unit 141 of the local inference unit 140 uses a model smaller than the convolutional CNN that is the feature extraction unit 131 of the global inference unit 130. This is because, when a small image is input, the model capacity becomes excessive if the model is large. The local inference unit 140 uses ResNet-18 as an example of the feature extraction unit 141. The classification unit 142 is a normal MLP that uses, as an activation function, a softmax function that outputs a class probability. Since the small image is information artificially localized from the entire image, the local inference unit 140 is a model more specialized for local information processing than the global inference unit 130.

The training unit 120 calculates a loss value using a cost function having four cost terms based on the point probabilities inferred by the global inference unit 130 and the local inference unit 140. The training unit 120 trains the inference models for the global inference unit 130 and the local inference unit 140 by simultaneously using backpropagation.

The training unit 120 utilizes coordinate information of unlabeled points for each epoch in training. The epoch is a unit of training for completing training with one set of training data. The training unit 120 uses the coordinate information of the unlabeled points for entropy minimization and consistency regularization.

The cost function will be described in detail. The cost function of the training unit 120 includes four terms: L^{g}, which is a loss function of an extended focal loss for the global inference unit 130; L¹, which is a loss function of an extended focal loss for the local inference unit 140; R¹², which is L₂ regularization; and R^{con}, which is global-local consistency regularization (GLCR). By combining these four terms, the cost function is defined as follows. [Math.1] $L = {L}^{g} + {L}^{l} + {λ}_{1} {R}^{l 2} + {λ}_{2} {R}^{con}$

Here, λ₁ is a hyperparameter for adjusting the magnitude of the value of R^{l2}, and λ₂ is a hyperparameter for adjusting the magnitude of the value of R^{con}.

Details of these four terms will be described below. First, loss functions L^{g} and L^{l} for the global inference unit 130 and the local inference unit 140 are defined as follows. [Math. 2] ${L}^{t} = {{f}^{t}}_{L} + {{δf}^{t}}_{U}$

Here, t is a symbol representing g in the case of the loss function of the global inference unit 130, and l in the case of the loss function of the local inference unit 140. δ is a hyperparameter for adjusting the magnitude of f^{t}_{U}. A loss function for normal supervised data is defined as f^{t}_{L}, and a loss function for special unlabeled data is defined as f^{t}_{U}. The normal focal loss has an adaptive term for underestimating loss values for correctly classified samples and overestimating loss values for misclassified samples, and is a loss function robust against class imbalance. The loss function for these two pieces of supervised/unsupervised data is defined as follows. [Math. 3] ${{f}^{t}}_{T} = - \frac{1}{{NM}_{T}} {\sum }_{i = 1}^{N} {\sum }_{j = 1}^{{M}_{T}} {α}_{ij} {\left(1-{{p}^{t}}_{ij}\right)}^{{γ}_{ij}} {{q}^{t}}_{ij} {{logp}^{t}}_{ij}$ [Math. 4] ${{q}^{t}}_{ij} = \left\{\begin{matrix}{y}_{ij} \left(T=L\right) \\ p {′}_{ij}^{t} \left(T=U\right)\end{matrix}\right.$

Here, T is a symbol representing L in the case of a loss function for labeled data, and U in the case of a loss function for unlabeled data.N represents the number of received images, and M_{T} represents the number of labeled points or unlabeled points on the image.The loss function has two types of hyperparameters, which are α and γ.The number of unlabeled points and the number of labeled points are M_{U} > M_{L}. This is because the unlabeled points can be automatically generated and can be increased more easily than the labeled points. The point probability p^{t}ᵢⱼ ∈ R^{K} represents the predicted class probability from the global inference unit 130 or the local inference unit 140 for j-th coordinate information in an i-th image. K represents the number of classes. The value of q^{t}ᵢⱼ ∈ R^{K} corresponding to the objective variable of the loss function changes depending on the type of data. In the case of the loss function for labeled data, the objective variable q^{t}ᵢⱼ represents a one-hot encoded class label yᵢⱼ ∈ R^{K}. In the case of the loss function for unlabeled data, the objective variable q^{t}ᵢⱼ represents a pseudo label. A pseudo label p'^{t} is defined as follows. [Math. 5] $p {{′}^{t}}_{ij} = σ \left(\frac{{{u}^{t}}_{ij}}{τ}\right) = \frac{ex p \left(\frac{{{u}^{t}}_{ij}}{τ}\right)}{{\sum }_{k = 1}^{K} ex p \left(\frac{{{u}^{t}}_{ij}}{τ}\right)}$

Here, σ () represents the softmax function, and u^{t}ᵢⱼ ∈ R^{K} represents the logit of the global inference unit 130 or the local inference unit 140 before σ () is applied. The logit is an output of a model having a value range of [-∞, ∞]. In addition, τ represents a temperature parameter. The temperature parameter is a hyperparameter for controlling sharpness of the class probability distribution in the output of the softmax function. The lower the temperature parameter τ, the sharper the distribution, and thus the entropy decreases. The higher the temperature parameter τ, the smoother the distribution, and thus the entropy increases. In the loss function for unlabeled data, since the point probability p^{t} of itself that becomes sharp due to this temperature parameter is used as an objective variable, training is executed such that the point probability becomes high by self-reference. This is a technique based on entropy minimization and pseudo labeling. When the j-th coordinate information for a received image xᵢ is zᵢⱼ, a set of labeled points including a class label and coordinate information, which is generated by executing point annotation on the i-th image, is expressed as follows. [Math. 6] ${\left\{\left({y}_{ij}, {z}_{ij}\right)\right\}}_{j = 1}^{{M}_{L}}$

A set of unlabeled points is expressed as follows. [Math. 7] ${\left\{\left({z}_{ij}\right)\right\}}_{j = 1}^{{M}_{U}}$

L₂ regularization R^{l2} is defined as follows. [Math. 8] ${R}^{l 2} = {\sum }_{w ∈ W} {w}^{2} + {\sum }_{b ∈ B} {b}^{2}$

Here, W and B represent the weight and bias parameters for the Point head generated by the Parameter head in the global inference unit 130. These parameters are parameters that are not directly trained by backpropagation.

The global-local consistency regularization R^{con} is defined as follows. [Math. 9] ${R}^{con} = \frac{1}{N \left({M}_{L}+{M}_{U}\right)} {\sum }_{i = 1}^{N} {\sum }_{j = 1}^{{M}_{L} + {M}_{U}} d \left({{p}^{g}}_{ij}, {{p}^{l}}_{ij}\right)$ [Math. 10] $d \left({{p}^{g}}_{ij}, {{p}^{l}}_{ij}\right) = {\sum }_{k = 1}^{K} {{p}^{g}}_{ijk} log \frac{{{p}^{g}}_{ijk}}{{{p}^{l}}_{ijk}}$

Here, K is the number of classes, and d (,) is Kullback-Leibler Divergence (KLD). KLD is a function used for knowledge distillation and mutual learning. By maintaining consistency between inferences for the same point of the global inference unit 130 and the local inference unit 140, two inference units can acquire a hierarchical representation of a feature space. Since the concept of the consistency can be applied to any coordinates in the image, R^{con} can also be calculated for the unlabeled point. Therefore, practical region division is achieved by utilizing a large number of unlabeled points even with only point annotation work that is likely to be sparse and biased in an image space. While many related-art consistency regularization methods for semi-supervised learning use perturbations, which are artificial noise, the training unit 120 achieves consistency regularization for semi-supervised learning that does not require perturbations. Therefore, it is not necessary to consider the influence of the perturbation on the feature distribution of the data, and it is possible to prevent deterioration in generalization performance due to the perturbation.

The training unit 120 causes the global inference unit 130 and the local inference unit 140 to train simultaneously such that a cost function L including these four terms which are L^{g}, L^{l}, R^{l2}, and R^{con} is minimized. When the training ends, the inference models of the global inference unit 130 and the local inference unit 140 are completed (step S208), and the training phase ends.

### <2. Inference Phase>

### <2-1. Configuration>

FIG. 10 is a block diagram showing a configuration of an image processing apparatus 200 in the inference phase according to the first embodiment. The image processing apparatus 200 includes an image input unit 210 that inputs an image to be processed for region division, a region division unit 220 that performs the region division on the received image, and an image output unit 230 that outputs the image divided into regions by the region division unit 220.

The image input unit 210 reads an image to be processed stored in an SSD, a hard disk drive, a memory, or the like according to the designation of a user, and outputs the image to be processed to the region division unit 220. The region division unit 220 includes the global inference unit 130 including a trained inference model trained in the training phase, and performs region division on an image using the global inference unit 130. The image output unit 230 outputs the image divided into regions to a display or the like. The image output unit 230 may store the image divided into regions in an SSD, a hard disk drive, a memory, or the like.

The image processing apparatus 200 includes a memory and a processor, and blocks shown inside the image processing apparatus 200 in FIG. 10 are implemented by software in which the memory and the processor operate in cooperation with each other. The blocks may also be implemented as a program that operates on a computer. Not all of the blocks need to be implemented by software, and a part of the blocks may be implemented by hardware.

In the present embodiment, the configurations of the image processing apparatus 100 and the image processing apparatus 200 have been described separately for the training phase and the inference phase. The image processing apparatus 100 and the image processing apparatus 200 do not need to be implemented by separate computers, and may be implemented such that blocks constituting the apparatuses are operated on one apparatus such as a single computer.

### <2-2. Operation>

The operation of the image processing apparatus 200 will be described below. FIG. 11 is a flowchart showing the operation of the image processing apparatus 200.

The image processing apparatus 200 receives, via the image input unit 210, an image to be processed for region division (step S1101). The region division unit 220 inputs the image to be processed and the coordinate information to the trained global inference unit 130, and outputs the point probability at the coordinates. The region division unit 220 sequentially uses coordinate information of all pixels constituting the image to be processed as coordinate information input to the global inference unit 130 while scanning all pixels. The region division unit 220 classifies the pixels in the image to be processed into a specific class based on the point probabilities of all pixels output by the global inference unit 130, and outputs an image divided into regions in pixel units. The image output unit 230 outputs the image subjected to the region division output by the region division unit 220 to a display or the like (step S1103).

### <3. Effects and The Like>

In the present embodiment, the image processing apparatus 100 is an image processing apparatus 100 for performing region division on an image to be processed using a neural network, and includes the global inference unit 130 that extracts a global feature of an image to execute inference, the local inference unit 140 that extracts a local feature of the image to execute inference, and the training unit 120 that executes semi-supervised learning in each of the global inference unit 130 and the local inference unit 140 using inference results of both the global inference unit 130 and the local inference unit 140. The image processing apparatus 100 can improve learning accuracy by using two different inference methods, namely inference performed by extracting the global feature of the image and inference performed by extracting the local feature of the image, and by causing each of the two different inference methods to perform semi-supervised learning based on both inference results.

In the present embodiment, the image processing apparatus 100 is an image processing apparatus 100 for performing region division on an image to be processed using a neural network, and includes the global inference unit 130 that extracts a global feature of an image to infer a prediction probability of each pixel constituting the image, the local inference unit 140 that extracts a local feature of the image to infer a prediction probability of each pixel constituting the image, and the training unit 120 that executes semi-supervised learning in each of the global inference unit 130 and the local inference unit 140 using a cost function including a difference between the prediction probabilities inferred in the global inference unit 130 and the local inference unit 140 for each pixel. The image processing apparatus 100 can improve learning accuracy by using two different inference methods, namely inference performed by extracting the global feature of the image and inference performed by extracting the local feature of the image, and by causing each of the two different inference methods to perform semi-supervised learning so as to minimize the cost function including a difference between prediction probabilities that are inference results.

The image processing apparatus 100 may further include the image output unit 102 that outputs an image to the display device 101 and the operation input unit 104 to which any point selected on the image and label information of the point are input. The training unit 120 may use the image, the coordinate information on the image of the selected point, and the label information as a training dataset of the global inference unit 130, and may use, as a training dataset of the local inference unit 140, a small image obtained by cutting out a part of the image including the selected point, and the label information. The user can construct a training dataset by selecting a point on the image and executing point annotation work of labeling the selected point, and can reduce the work cost of training dataset creation. Based on the inference results of the two different methods of the global inference and the local inference, it is possible to improve the learning accuracy by executing semi-supervised learning on each of the global inference and the local inference, and to achieve both the improvement of the region division performance and the simplification of the annotation work.

A head mounted display may be used as the display device 101, and a point selected by a hand gesture and label information of the point may be input to the operation input unit 104. With this configuration, the user can designate the class label by pointing any point with a hand or a finger while viewing the image displayed on the head mounted display. Since point annotation can be executed by such an intuitive operation, improvement in work efficiency can be expected.

The training unit 120 may automatically generate coordinate information of any point on the image, and use the automatically generated coordinate information as a training dataset of the global inference unit 130 and the local inference unit 140. The user can construct a training dataset by automatically generating a point without executing point annotation work of selecting a point on the screen, and the work cost of training dataset creation can be reduced. Accordingly, it is possible to achieve both improvement in region division performance and simplification of the annotation work.

The cost function may include a loss function of the global inference unit 130, a loss function of the local inference unit 140, and an L2 regularization term. The image processing apparatus 100 can improve learning accuracy by using two different inference methods, namely inference performed by extracting the global feature of the image and inference performed by extracting the local feature of the image, and by causing each of the two different inference methods to perform semi-supervised learning so as to minimize the cost function including the loss function and the L2 regularization term according to the inference results.

In the present embodiment, the image processing apparatus 200 is an image processing apparatus 200 for performing region division on an image to be processed using a neural network, and includes the image input unit 210 that inputs the image to be processed, the global inference unit 130 that extracts a global feature of an image to execute inference, the local inference unit 140 that extracts a local feature of the image to execute inference, the region division unit 220 that executes semi-supervised learning in each of the global inference unit 130 and the local inference unit 140 using inference results of both the global inference unit 130 and the local inference unit 140 and that executes region division on the image to be processed using a trained inference model of the global inference unit 130, and the image output unit 230 that outputs the image subjected to the region division. The image processing apparatus 200 can improve region division performance by using the global inference unit 130 whose learning accuracy has been improved by causing each of two different inference methods, namely inference performed by extracting the global feature of the image and inference performed by extracting the local feature of the image, to perform semi-supervised learning based on both inference results.

In the present embodiment, an image processing method for performing region division on an image to be processed using a neural network includes a global inference step of extracting a global feature of an image to execute inference, a local inference step of extracting a local feature of the image to execute inference, and a training step of executing semi-supervised learning in each of the global inference step and the local inference step using inference results of both the global inference step and the local inference step. The image processing method according to the present embodiment can improve learning accuracy by using two different inference methods, namely inference performed by extracting the global feature of the image and inference performed by extracting the local feature of the image, and by causing each of the two different inference methods to perform semi-supervised learning based on both inference results.

### <4. Other Embodiments>

As described above, the first embodiment has been described as an example of the present invention. However, the present invention is not limited thereto, and can also be applied to embodiments in which changes, replacements, additions, omissions, and the like are made. Therefore, other embodiments will be exemplified below.

In the first embodiment, the configuration has been described in which the global inference unit includes the feature extraction unit, the extended pooling, the point feature extraction unit, and the point probability inference unit, and the global inference unit is not limited to this configuration. The global inference unit may have any configuration as long as the global inference unit can extract a global feature of an image to execute inference using an image for training and coordinate information as inputs and output a point probability of the coordinate information.

In the first embodiment, a configuration has been described in which the region division unit of the image processing apparatus in the inference phase uses the inference model of the trained global inference unit trained in the training phase. The region division unit may perform, using an inference model of the trained local inference unit trained in the training phase instead of the global inference unit, region division by the local inference unit. In this case, the region division unit generates small images centered on all coordinates in the image to be processed, and generates an image divided into regions based on a result of classifying all the small images.

In the first embodiment, a model based on a convolutional neural network is used for the global inference unit and the local inference unit, but the present invention is not limited thereto. For example, a model based on a "Vision Transformer (ViT)" may be used. When a model based on the ViT is used, it becomes possible to process global features more effectively than with a convolutional neural network. For example, it can be expected that the global feature and the local feature can be more effectively utilized for inference using the ViT for the global inference unit and using the convolutional neural network for the local inference unit.

### [Second Embodiment]

In a second embodiment, an image processing apparatus that performs visual inspection of a component or the like using a head mounted display will be described.

When a visual inspection is performed using a trained inference model, a portion that is not originally defective may be erroneously determined as defective, or a portion that is defective may be erroneously determined as not defective. Since the number and types of pieces of training data to be trained in advance are limited, for example, erroneous determination is likely to occur for an unknown defect. The environment in which the visual inspection is performed being different from the environment at the time of training may also cause erroneous determination.

In order to reduce such erroneous determination, it is desirable to re-train an existing trained model according to a new inspection environment. For example, the detection accuracy can be expected to be improved by newly adding the erroneously determined object to the training data and executing re-training.

However, in order to execute re-training, it is necessary to perform complicated work of capturing an image of an object to be newly trained with a camera or the like, capturing image data into a terminal such as a personal computer, specifying a region to be trained in the captured image to create training data, and executing training processing again. This increases the work load on site.

Therefore, in the second embodiment, an image processing apparatus capable of visually recognizing an inspection result while wearing a head mounted display and capable of generating a training dataset and executing training and re-training processing will be described.

### <1. Configuration>

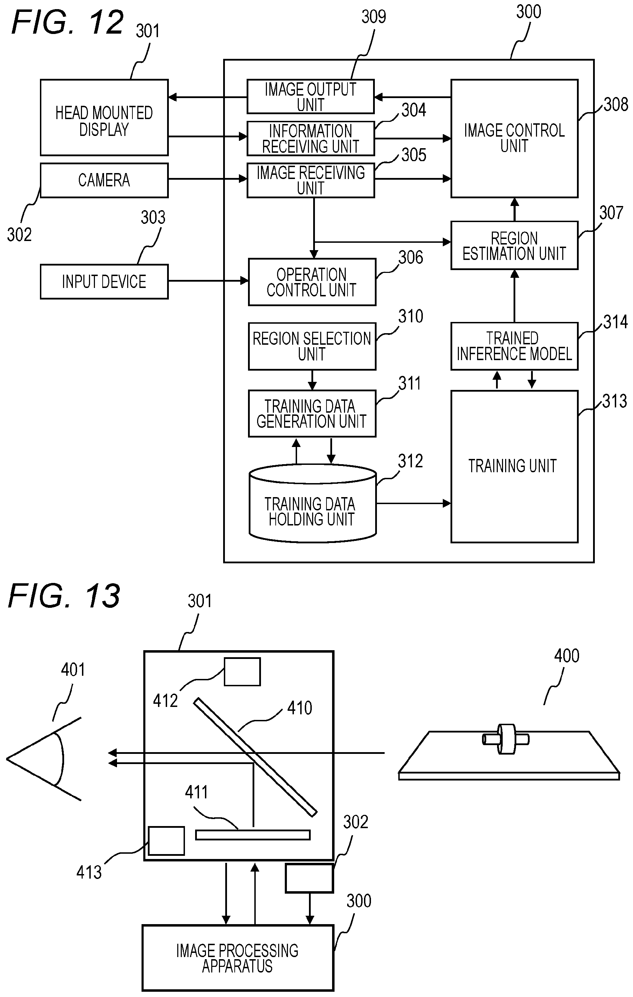

FIG. 12 is an overall configuration of an image processing system according to the second embodiment. A head mounted display 301 serving as a display device, a camera 302, and an input device 303 are connected to an image processing apparatus 300. A user who is an inspector wears the head mounted display 301 and performs inspection. The head mounted display 301 may be of either a transmissive type or a non-transmissive type.

The image processing apparatus 300 includes an information receiving unit 304 that receives position information and rotation information from the head mounted display 301, an image receiving unit 305 that receives image data from the camera 302, an operation control unit 306 that outputs a control signal for controlling an operation of the image processing apparatus 300 based on an input from the input device 303, a region estimation unit 307 that estimates a predetermined feature region based on the image data using the trained inference model 314, and an image control unit 308 that displays the feature region estimated by the region estimation unit 307 on the head mounted display 301 via the image output unit 309. The operation control unit 306 also has a function as an operation input unit to which information (for example, user operation information) from the input device 303 is input.

The image processing apparatus 300 includes a region selection unit 310 that selects any region of the image data, a training data generation unit 311 that generates training data, a training data holding unit 312 that holds the training data, and a training unit 313 that executes training processing using a neural network. The training data (namely a training dataset) is data used for training of the neural network, and is so-called labeled data in the case of supervised learning, for example.

The image processing apparatus 300 includes a memory and a processor, and blocks shown inside the image processing apparatus 300 in FIG. 12 are implemented by software in which the memory and the processor operate in cooperation with each other. The blocks may also be implemented as a program that operates on a computer. Not all of the blocks need to be implemented by software, and a part of the blocks may be implemented by hardware.

The head mounted display 301 is connected to the image processing apparatus 300 in a wired or wireless manner. The camera 302 is implemented integrally with the head mounted display 301, and captures a scenery (a foreground) of a real space that the user visually recognizes through the head mounted display 301. The camera 302 may be a wide-angle camera, an omnidirectional camera, or the like as long as the camera 302 can capture a scenery that can be visually recognized by the user, and may be implemented separately from the head mounted display 301.

The input device 303 is an input device such as a keyboard or a mouse. Of course, other input devices may be used as long as the input devices can be used in combination with the head mounted display 301. For example, by using a gesture input device (also referred to as a gesture device) or the like capable of detecting movement of a hand or a finger of the user, input by a hand gesture can be executed. The gesture input device uses, for example, a method of attaching a sensor to a hand or a finger of a user, or a method of capturing an image of a hand or a finger of a user with a camera. In the case of the sensor method, the movement of the hand or the finger of the user is detected by the sensor attached to the hand of the user. In the case of the camera method, the movement of the hand or the finger of the user is detected by analyzing the image of the camera that captures an image of the hand of the user.

When the movement of the hand or the finger of the user is captured, the camera 302 may be used for capturing. In this case, the operation of the input device 303 can be replaced by receiving image data captured by the camera 302 by the image receiving unit 305 and generating a control signal by analyzing the movement of the hand by the operation control unit 306. The operation of the image processing apparatus 300 can also be controlled in combination with the input device 303.

When the head mounted display 301 has a line-of-sight detection function, an input by a line-of-sight may be used. The line-of-sight information detected by the head mounted display 301 is transmitted to the operation control unit 306 via the information receiving unit 304. The operation control unit 306 analyzes the movement of the line-of-sight of the user and converts the movement into a control signal for controlling the operation of the image processing apparatus 300. Accordingly, it is possible to control the operation of the image processing apparatus 300 using the movement of the line-of-sight. The operation of the image processing apparatus 300 can also be controlled in combination with the input device 303, a hand gesture, or the like.

FIG. 13 shows a configuration example of the head mounted display 301. Here, a transmissive type head mounted display will be described as an example. The head mounted display 301 includes a half mirror 410, a liquid crystal display unit 411, a gyro sensor 412 that detects the position and rotation of the head mounted display 301, and a line-of-sight sensor 413 that detects the movement of an eye 401 of the user.

The user can visually recognize the real space via the half mirror 410. Specifically, a foreground 400 that is a scenery in front of the eye is visually recognized. The foreground 400 is captured by the camera 302 and input to the image processing apparatus 300. The image processing apparatus 300 acquires position information and rotation information of the head mounted display 301 from the gyro sensor 412. The image processing apparatus 300 corrects the display position and the display angle of the processed image based on the position information and the rotation information, and displays the image on the liquid crystal display unit 411. This correction is executed such that the output image of the image processing apparatus 300 is superimposed and displayed on the foreground 400. Accordingly, the user can visually recognize the image output from the image processing apparatus 300 while superimposing the image on the foreground 400.

Although the configuration of the head mounted display 301 has been described as an example, the present invention is not limited thereto. Another configuration may be used as long as the head mounted display 301 has a function of superimposing and displaying an image output from the image processing apparatus 300 on a scenery in the real world visually recognized by the user.

### <2. Operation>

The operation of the image processing apparatus 300 will be described with reference to the drawings. In the present embodiment, image processing when visual inspection of a component used in a factory or the like is performed will be described as an example. The operation of the image processing apparatus 300 is roughly divided into three modes which are an inspection mode, a re-training mode, and a training mode. The operation will be described below for each mode.

### <2-1. Inspection Mode>

The inspection mode is a mode in which visual inspection of a component is performed. A region (a feature region) including a predetermined feature is specified using an inference model trained in advance. In the present embodiment, a region (hereinafter referred to as an abnormal region) including a defect in the appearance of a component is treated as the feature region. Here, the defect refers to a defect in appearance represented by a scratch, a depression, a deposit such as hair, distortion, or the like.

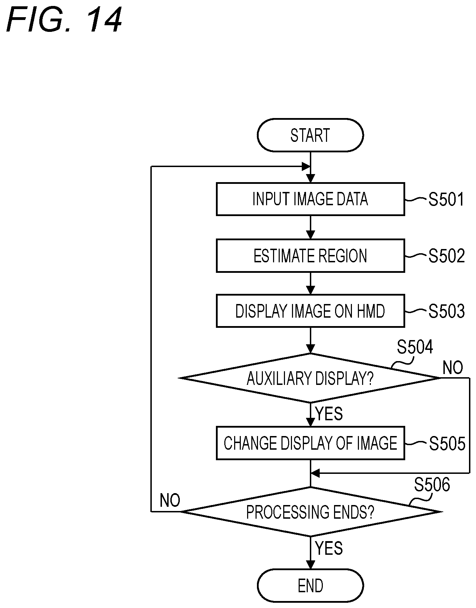

FIG. 14 is a flowchart showing processing in the inspection mode of the image processing apparatus 300. First, when the user wears the head mounted display 301, the foreground 400 enters the field of view of the user. Then, the foreground 400 is captured by the camera 302 mounted on the head mounted display 301, and image data of the captured foreground 400 is input to the image receiving unit 305 (step S501).

Next, the region estimation unit 307 estimates the feature region using a trained inference model 314 of the neural network (step S502).

In general, in a case in which the feature region is estimated using the neural network, for example, an inference model trained such that an output value of the neural network increases when an image having a predetermined feature is received is used. By using this inference model, a relatively high numerical value is output when the image having a predetermined feature is received, and a relatively low numerical value is output otherwise. Based on this output value, it is estimated whether the predetermined feature is included in the received image.

In the present embodiment, the inference model trained such that the output value increases when an image including a defect is received and the output value decreases when an image not including a defect is received is used as the trained inference model 314. Then, the output value of the trained inference model 314 is used as an evaluation value, and when the evaluation value exceeds a predetermined value, an abnormal region including a defect is estimated. The evaluation value is, for example, a value from 0 to 1, and the predetermined value in this case is, for example, a value such as 0.5. The evaluation value can also be expressed in percentage, and the predetermined value in this case is a value such as 50%.

The training can also be executed for each pixel. For example, in a case in which a neural network that receives an image of 512 × 512 pixels and that outputs 512 × 512 is implemented, when an image having a predetermined feature is received, training is executed such that the output value of a portion corresponding to a pixel of a feature region increases. When the inference model trained in this way is used, the evaluation value can be calculated for each pixel of the received image. A set of pixels whose evaluation values exceed a predetermined value is estimated as an abnormal region. Accordingly, it is possible to estimate the size and shape of the abnormal region.

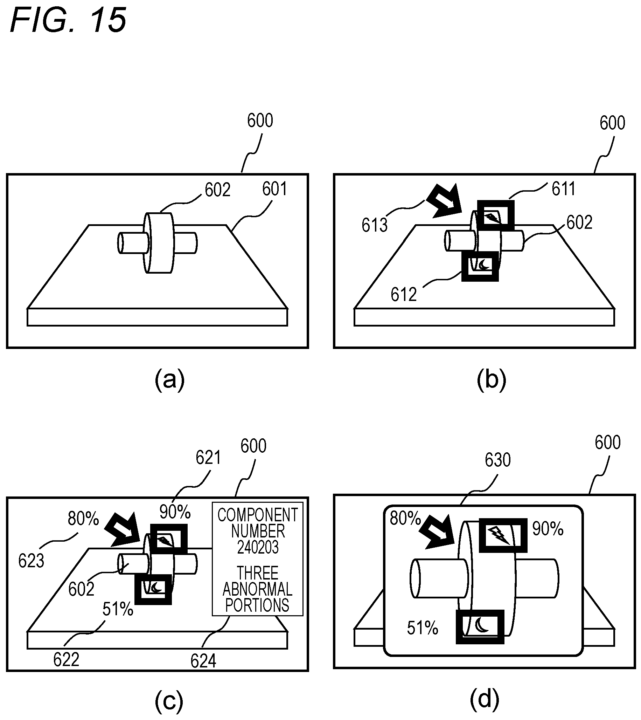

A region estimated as the abnormal region is displayed on the head mounted display 301 by the image control unit 308 (step S503). In FIG. 14, a head mounted display (HMD) is the head mounted display 301. Here, the image control unit 308 displays the estimated abnormal region on the liquid crystal display unit 411 such that the abnormal region is superimposed and displayed on the foreground 400 on the head mounted display 301. Specifically, the abnormal region is superimposed and displayed by correcting the display position, the display angle, and the like of the image indicating the abnormal region based on the position information and the rotation information of the head mounted display 301. A display example of the head mounted display 301 is shown in FIG. 15.

FIG. 15 shows the display example of the head mounted display 301. In (a) to (d) of FIG. 15, 600 schematically shows an image presented to the user via the half mirror 410 of the head mounted display 301. That is, a state is shown in which the image transmitted through the half mirror 410 and the image displayed on the liquid crystal display unit 411 are combined.

(a) of FIG. 15 is a display example when there is no defect in the component 602. Since the component 602 does not include a defect, there is no output from the image processing apparatus 300, and the user visually recognizes the foreground 400 including a stand 601 and a component 602 via the half mirror.

(b) of FIG. 15 is a display example when the component 602 includes a defect. A mark 611 and a mark 612 indicate the estimated abnormal region. In this way, since the abnormal region is superimposed and displayed on the component in the real space and can be visually recognized, the user can clearly identify the location of the abnormal region in the component 602. The marks 611 and 612 are displayed on the liquid crystal display unit 411 of the head mounted display 301 by the image processing apparatus 300. These marks are superimposed on the foreground 400 by the half mirror 410 and visually recognized by the user.

The mark 613 is a mark indicating that an abnormal region is present on the back side of the component. Although the abnormal region on the back side of the component 602 cannot be detected only from the image captured from one direction, the component 602 can be captured from various angles by the user rotating the stand 601 while wearing the head mounted display 301 or circling around the stand 601. Accordingly, the abnormal region on the back side of the component 602 can also be estimated. The mark 613 is displayed in a different manner from the mark 611 and the mark 612 to indicate that there is an abnormal region on the back side of the component.

Next, the user visually checks whether there is a defect in the component 602 using the marks 611 to 613 displayed on the head mounted display 301 as a clue. Since the marks 611 to 613 are displayed at a portion where a defect may be included, the user may intensively check the region indicated by the marks 611 to 613. The inspection can be efficiently performed as compared with a case in which all the regions are visually checked. If a defect is visually confirmed, the component is determined to be defective, and the inspection ends.

Here, if the estimation of the abnormal region is satisfactorily executed, the user can make the final determination only by visually checking the abnormal region. However, a good estimation result may not be obtained depending on the inspection environment. For example, there is a case in which a large number of components not included in training are inspected or a case in which the environment of the work place changes. In this case, the reliability of the evaluation value indicating the abnormal region decreases, and for example, a region may be estimated as the abnormal region even though no defect is included. In such a situation, it is necessary to carefully visually check whether the region indicated by the marks 611 to 613 is a true abnormal region, and the work efficiency of the inspection decreases.

Therefore, in such a case, the user can display auxiliary information on the head mounted display 301. The auxiliary information is information that serves as a reference for the user to perform visual inspection.

When the auxiliary information is necessary, the user instructs the image processing apparatus 300 to display the auxiliary information (step S504). Then, the image control unit 308 also outputs the auxiliary information (step S505). This state is shown in (c) of FIG. 15.

(c) of FIG. 15 is a display example showing the auxiliary information related to a component. Evaluation values 621 to 623 are obtained by converting the output value of the trained inference model 314 into a percentage. As described above, the higher the evaluation value, the higher the chance that the component includes a defect. Here, since the evaluation values of the regions of the marks 611 and 613 are as high as "90%" and "80%", respectively, it is considered that there is a high chance that these regions include defects. Therefore, the user can make a final determination that a defect is included by simply executing visual checking.

On the other hand, when the evaluation value is low, the estimation of the abnormal region may be erroneous. Here, since the evaluation value of the mark 612 is as low as "51%", this region may be erroneously estimated. Therefore, the user carefully visually checks the region of the mark 612. When a defect is visually confirmed, the estimation result is maintained. On the other hand, when no defect is confirmed, the estimation result is corrected. In this way, by referring to the evaluation value, it is possible to preferentially and intensively check a region having a high chance of being erroneously determined, and thus the user can efficiently perform inspection.

Another example of the auxiliary information related to the component is shown in 624. Here, the model number of the component and the number of abnormal regions estimated by the region estimation unit 307 are displayed. By displaying the model number, misidentification of the component can be prevented. When there are a large number of abnormal regions, it is possible to prevent omission of checking by displaying the total number of abnormal regions. By performing inspection with reference to such auxiliary information, work efficiency can be improved. When the inspection ends, the processing ends (step S506).

(d) of FIG. 15 is a display example in which the component is enlarged and displayed. If enlarged display is necessary, the user instructs the image processing apparatus 300 to perform enlarged display (step S504). Then, the image control unit 308 outputs the enlarged image (step S505). An enlarged image 630 enlarged by the image processing apparatus 300 is displayed on the liquid crystal display unit 411 and is superimposed by the half mirror 410 so as to enter the field of view of the user. The enlargement ratio of the enlarged image 430 is controlled by the image control unit 308 and can be enlarged and displayed at a desired magnification. For example, as shown in (d) of FIG. 15, the entire component can be largely enlarged, and if only the region of the mark 612 is designated, only the region of the mark 612 can be enlarged and displayed. This function is effective when it is desired to execute checking more carefully, such as when a defective portion is small. Of course, reduced display can also be performed. This is effective for viewing the entire component from above. The user executes visual checking with reference to the enlarged or reduced image, and ends the processing when all inspections are completed (step S506).

The present invention is not limited to the auxiliary information described with reference to (c) of FIG. 15, and other information such as information necessary for inspection can also be displayed. Although not shown here, a counting result corresponding to the level of the evaluation value may be displayed. For example, an evaluation value rank may be defined, and the number of abnormal regions for each rank may be displayed by classifying an evaluation value exceeding 90% as rank A, an evaluation value exceeding 70% and not exceeding 90% as rank B, and an evaluation value exceeding 50% and not exceeding 70% as rank C. For example, since the region of the rank A is highly likely to include a defect, a component having a large number of ranks A is estimated to be a component having a large number of defects. By displaying the number of regions for each rank, the state of the component can be checked at a glance.

Although the number of the evaluation value itself is presented to the user as an example of the auxiliary information, the auxiliary information is not limited thereto. As long as the approximate magnitude of the evaluation value can be presented to the user, for example, the color or shape of the marks 611 to 613 may be changed and displayed for each rank described above instead of displaying a number.

The instruction of the auxiliary information can be executed by any method, such as the input device 303, a hand gesture, or a line-of-sight input. Although not shown here, for example, when the auxiliary information as shown in (c) of FIG. 15 is displayed, a button described as "auxiliary information display" may be displayed on the screen, and the button may be operated by an input device such as a mouse, a hand gesture, a line-of-sight input, or the like. When the head mounted display 301 is worn, it may be difficult to handle an input device such as a mouse or a keyboard, and thus it is desirable that an instruction can be executed by a hand gesture, a line-of-sight input, or the like.

Similarly, the enlarged display can be performed by any method such as the input device 303, a hand gesture, or a line-of-sight input. When a hand gesture is used, for example, enlargement or reduction can be achieved by performing an operation such as pinch-in or pinch-out using two fingers. Accordingly, an intuitive and easy-to-understand operation can be performed.

### <2-2. Re-training Mode>

Next, the re-training mode will be described. When the abnormal region is stably and favorably estimated by the region estimation unit 307, it is not necessary to re-train the inference model. However, the inference model trained in advance under a predetermined condition is not universal, and as described above, the estimation of the abnormal region may not be correctly executed when, for example, the inspection environment changes. In this case, it is desirable to re-train the trained inference model. This is because an inference model more suitable for the actual environment can be constructed by customizing a trained inference model trained under a predetermined condition based on the actual environment.

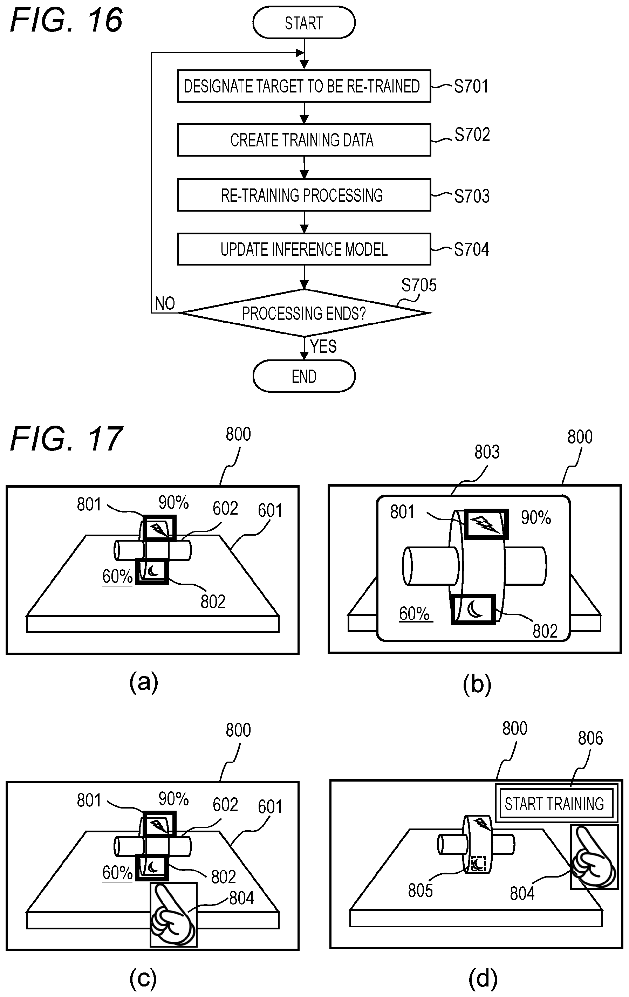

FIG. 16 is a flowchart showing processing of the image processing apparatus 300 in the re-training mode. The processing in the re-training mode is executed following the processing in the inspection mode. This state will be described with reference to FIG. 17.

FIG. 17 shows a display example of the head mounted display 301. In (a) to (d) of FIG. 17, 800 schematically shows an image presented to the user via the half mirror 410 of the head mounted display 301. That is, a state is shown in which the image transmitted through the half mirror 410 and the image displayed on the liquid crystal display unit 411 are combined.

(a) of FIG. 17 shows a state of the inspection mode, and an abnormal region is displayed by marks 801 and 802. Here, the mark 802 has a relatively low evaluation value of "60%", and thus is underlined below the numerical value. This is because, when the evaluation value is smaller than a predetermined value (for example, 70%), the user is alerted to that effect, and visual checking or re-training is prompted. (b) of FIG. 17 shows a state in which the component 602 is enlarged and displayed. The user determines whether a defect is included by displaying an enlarged image of the component as necessary and visually checking the region of the mark 802.

When it is determined that no defect is included in the region of the mark 802, that is, when the estimation by the region estimation unit 307 is incorrect, the user can transition to the re-training mode and re-train the trained inference model 314. The transition to the re-training mode is performed based on an instruction from the user. For example, the mode transitions to the re-training mode by an instruction by the input device 303, a hand gesture, or the like.

When the mode transitions to the re-training mode, the processing shown in FIG. 16 is started. First, the user designates a region to be re-trained by the region selection unit 310 (step S701). The region of the mark 802 is determined to be an abnormal region although the region is originally a portion where there is no defect. Therefore, as shown in (c) of FIG. 17, the region of the mark 802 is designated as a region to be re-trained, that is, a region to be trained. Then, as shown in (d) of FIG. 17, the designated region is displayed by a mark 805.

The region can be designated by the user directly pointing to a component in the real space. As described above, the movement of a finger 804 of the user is captured by the camera 302 and analyzed by the operation control unit 306 to detect the location pointed by the user. Since a region can be designated by directly pointing a component in the real space, an intuitive and easy-to-use operation can be achieved. The region can also be selected using the line-of-sight sensor 413. For example, a region gazed by the user may be detected and the region may be selected.

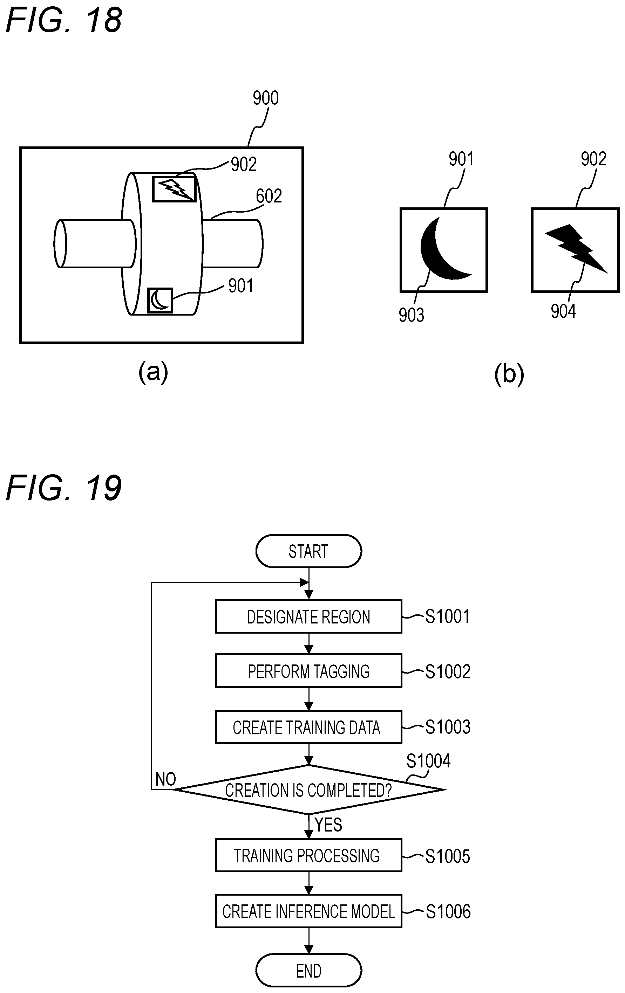

When the region is selected, training data for re-training is generated (step S702). FIG. 18 is a diagram schematically showing training data. 900 denotes training data when the entire component is to be trained. A region 901 is a region selected by the region selection unit 310. As the region 901, the region indicated by the mark 802 in the inspection mode may be designated, or the user may designate the region by drawing any rectangle. Alternatively, the user may designate a region by designating only one point and creating a rectangle having a predetermined width and height around the point. Then, the region 901 is associated with information indicating "normal region" to generate training data 900.

The training data 900 includes a region 902 estimated to be an abnormal region. For this abnormal region, since good region estimation is executed by the existing trained inference model 314, re-training is basically unnecessary. However, for example, when the re-training is intensively executed only on the region 901, the accuracy of the region estimation which has been satisfactorily executed so far may decrease. In such a case, a well estimated region may also be added to the target of re-training. Accordingly, it can be expected to prevent a decrease in accuracy. In this case, the training data 900 may be generated by associating information indicating a "normal region" with the region 901 and associating information indicating an "abnormal region" with the region 902.

The region 901 and the region 902 have been described as rectangular regions. Alternatively, a target region may be designated in more detail, and a region of a defect itself may be designated. For example, a region 903 and a region 904 in (b) of FIG. 18 may be designated as regions to be re-trained.

In the present embodiment, a case has been described in which the entire component is set as the training target. Alternatively, for example, a defective portion may be set as the training target alone. In this case, the region 901 and the region 902 in (b) of FIG. 18 are used as training data, information indicating a "normal region" is associated with the region 903, and information indicating an "abnormal region" is associated with the region 904, thereby generating training data.

When the generation of the training data is completed, re-training processing is executed in the training unit 313 (step S703). The re-training is started by pressing a button 806 on the screen. The button 806 may be pressed using the input device 303, or may be operated by a hand gesture, a line-of-sight input, or the like.

The re-training processing is executed using the trained inference model 314 as an initial value and using the new training data generated in step S702. Then, the trained inference model 314 is updated by the inference model after re-training (step S704). Then, when all the re-training is completed, the processing in the re-training mode ends (step S705). By using the updated trained inference model 314 in the inspection mode, it can be expected that the region indicated by the mark 802 is estimated as a normal region.

In the present embodiment, it has been described that the re-training is executed using the new training data generated in step S702. Alternatively, the re-training may be executed including the already trained training data. This is effective when it is not desired to greatly change the existing inference model. In this case, existing training data is also read from the training data holding unit 312, and re-training is executed together with new training data.

### <2-3. Training Mode>

Next, the training mode will be described. In the above description, it is assumed that the trained inference model 314 is present. The training mode is a mode in which new training data is created and in which an inference model is generated based on the new training data.

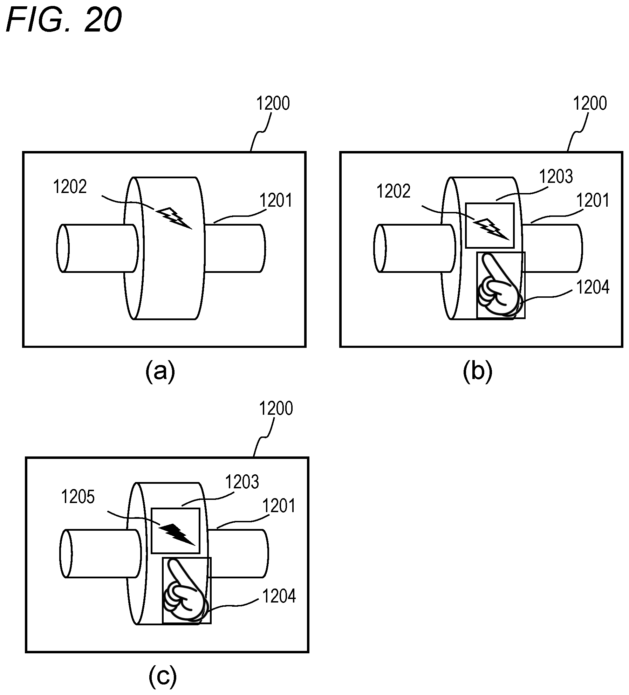

FIG. 19 is a flowchart showing processing in the training mode of the image processing apparatus 300. The processing in the training mode is performed in a state in which the user wears the head mounted display 301. When the processing of the training mode is started, first, the region selection unit 310 designates a region to which a tag for training is attached (step S1001). Next, the training data generation unit 311 associates the tag information (step S1002). Then, training data is generated (step S1003). This state will be described with reference to FIG. 20.

FIG. 20 shows a display example of the head mounted display 301. 1200 schematically shows an image presented to the user via the half mirror 410 of the head mounted display 301. (a) of FIG. 20 shows a state in which the component 1201 in the real space is visible. Here, an example will be described in which the training data is generated by associating tag information indicating "defective" with the region of the defect 1202, which is one of the feature regions of the image.

First, the region designation (step S1001) will be described. (b) of FIG. 20 shows a state in which a region is designated by a hand gesture. A finger 1204 is a finger of the user in the real space, and shows a state in which the finger 1204 points to the vicinity of a defect 1202. When the operation of the finger of the user is analyzed by the operation control unit 306, the region selection unit 310 designates a region within a predetermined range from the distal end of the finger 1204 as a neighboring region. Then, the image control unit 308 displays this neighboring region 1203.

Next, as shown in (c) of FIG. 20, a defective region 1205 is specified from the neighboring region 1203. The defective region 1205 can be specified by applying a method such as region division to the neighboring region 1203. Accordingly, the processing up to the specification of the defective region 1205 can be automatically executed only by the user pointing the vicinity of the defect 1202. The neighboring region 1203 has been described as a region division target. Alternatively, the entire screen may be a region division target without forming the neighboring region. The defective region 1205 can be manually specified by a finger operation, the input device 303, or the like.

When the defective region 1205 is specified, tagging for training is performed (step S1002). In the present embodiment, tag information indicating "defective" is associated with the defective region 1205. Specifically, a "class label" classified by the type of the defect is associated. The "class label" is represented by a numerical value corresponding to the type of the defect, for example, "0" in a normal case, "1" in a scratch case, and "2" in a depression case. More specifically, the "class label" that is label information is associated with the coordinates of each point included in the defective region 1205.

When the tagging is completed, training data is generated (step S1003). Here, the description has been given based on the image displayed on the head mounted display 301, but in practice, the specification of the defective region 1205 and the association of the tag information are executed on the image data captured by the camera 302. The tag information is received from the input device 303, for example. Then, the image data associated with the tag information is converted into a predetermined size and generated as training data. Here, an image corresponding to 1200 in (c) of FIG. 20 is generated as training data.

Although the entire component is set as the training target here, when only the defective region is set as the training target, for example, the neighboring region 1203 or the defective region 1205 may be output as the training data alone. The generated training data is held in the training data holding unit 312.

When the creation of the training data is completed (step S1004), the training unit 313 executes training processing of the neural network using the training data held in the training data holding unit 312 (step S1005). When the training is completed, the trained inference model 314 is created (step S1006), and the training mode ends.

In (a) to (c) of FIG. 20, the neighboring region 1203 and the defective region 1205 have been described as images output from the image processing apparatus 300 and superimposed for display, and the other portions have been described as real-space images visually recognized through the transmissive display. However, since the image in the real space is captured by the camera 302, a part or all of the objects in the real space can be output from the image processing apparatus 300.

Although the training mode has been described as a mode in which training data is created and training is newly executed, the training mode can also be applied to, for example, re-training. In the re-training mode described above, re-training is executed on the region specified in the inspection mode as the target, but for example, when a defect is found in a region in which an abnormal region is not estimated in the state in (b) of FIG. 15, training data can be generated using steps S1001 to S1003 in this mode. Accordingly, in addition to a region in which a portion that is not originally defective is estimated to be defective, re-training can also be executed for a region that is estimated to be not defective although the region is originally defective.

As described above, the second embodiment has been described as an example of the present invention. However, the present invention is not limited thereto, and can also be applied to embodiments in which changes, replacements, additions, omissions, and the like are made. For example, the image processing apparatus according to the present invention can achieve the same operation even when the head mounted display 301 in FIG. 12 is replaced with a non-transparent head mounted display. In the embodiments described above, the information regarding the feature region and the foreground 400 are combined by the half mirror 410. On the other hand, when the non-transparent head mounted display is used, the image control unit 308 executes the combination such that the information regarding the feature region is superimposed on the image of the foreground 400. This operation will be described with reference to FIG. 12.

The image receiving unit 305 receives an image of the foreground 400 from the camera 302 mounted on the head mounted display 301. The image control unit 308 combines information regarding the feature region estimated by the region estimation unit 307 with the image of the foreground 400, and outputs the combined image to the head mounted display 301 via the image output unit 309. Accordingly, the user can visually recognize the image in which the information regarding the feature region is superimposed and displayed on the foreground 400. The other operations are the same as those in the embodiments described above, and any operation in the inspection mode, the re-training mode, and the training mode described with reference to FIGS. 14 to 20 can be similarly achieved. With this configuration, the user can execute inspection and training processing while wearing the head mounted display.

The training unit 313 and the trained inference model 314 that are described in the second embodiment may include the global inference unit 130 and the local inference unit 140 in the first embodiment. The operations of inference and training in this case have been described in detail in the first embodiment, and thus will not be described here.

### <3. Effects and The Like>

In the present embodiment, the image processing apparatus 300 is an image processing apparatus 300 for performing region division on an image to be processed using a neural network, and includes the image output unit 309 that outputs an image to a display device (the head mounted display 301), an operation input unit (the operation control unit 306) to which any point selected on the image by a hand gesture and label information of the point are input, and the training unit 313 that trains an inference model that extracts a feature of the image. The training unit 313 uses the image, coordinate information on the image of the selected point, and the label information as training data of the inference model 314. Since the user can designate the class label by pointing any point with a hand or a finger while viewing the image displayed on the display device, improvement in work efficiency can be expected.

The display device may be a head mounted display, and the operation input unit (the operation control unit 306) may receive an input operation from a gesture device that detects movement of the hand of the operator as a hand gesture. By using a gesture input with a hand or a finger, it is possible to select any point on an image while wearing the head mounted display 301.

The training data generation unit 311 that associates the label information with a point on the image designated by a hand gesture and that generates training data based on the image, coordinate information on the image of the selected point, and the label information may be further provided, and the training unit 313 may train the inference model 314 using the training data generated by the training data generation unit 311.

The region estimation unit 307 that estimates a feature region of an image using the inference model 314, and the image control unit 308 that superimposes auxiliary information regarding the feature region of the image estimated by the region estimation unit 307 on the image and that outputs the image to the display device (the head mounted display 301) may be further provided. Since the auxiliary information regarding the feature region is superimposed and displayed, various types of information can be visually recognized only by viewing the screen displayed on the display device.

The auxiliary information may include information (such as the evaluation value 621) indicating the inference result obtained by the inference model 314. It is possible to check whether the feature region has been appropriately extracted by the inference model 314, which can be used as reference information for determining whether re-training is necessary.

The image control unit 308 may enlarge or reduce a part of the superimposed image and output the enlarged or reduced image to the display device (the head mounted display 301). By enlarging a part of the image, the state of the image can be checked in more detail. By displaying the image in a reduced size, the whole image can be viewed from above.

The training data holding unit 312 that holds trained training data may be further provided, the inference model 314 may be the trained inference model 314 that is trained using the training data held in the training data holding unit 312, and the training unit 313 may train the trained inference model 314 using both the training data held in the training data holding unit 312 and the training data generated by the training data generation unit 311. Since the inference model can be updated by, for example, adding new training data to the trained inference model according to the actual use environment and executing re-training, the accuracy of inference can be improved even in the actual environment.

In the present embodiment, the image processing apparatus 300 is an image processing apparatus for displaying an image on the head mounted display 301, and includes the image receiving unit 305 that receives image data obtained by capturing an image of a foreground of the head mounted display 301, the region estimation unit 307 that estimates a predetermined feature region based on the image data using the inference model 314 of a neural network, the image control unit 308 that outputs information regarding the feature region, the region selection unit 310 that selects any region in the image data, the training data generation unit 311 that generates an image included in the region selected by the region selection unit 310 as training data, and the training unit 313 that executes training using at least the training data generated by the training data generation unit 311 and generates an inference model. Since inspection and training can be executed while referring to the image displayed on the head mounted display 301, work efficiency can be improved. It is possible to generate an inference model adapted to an actual environment by adding an object at an actual work site to training data.

The image control unit 308 may output display data in which the information regarding the feature region is superimposed on the image data received by the image receiving unit 305. Accordingly, since the information regarding the estimated feature region is superimposed and displayed on the foreground, it is possible to execute work such as inspection and training while wearing the head mounted display.

The head mounted display 301 may be a transmissive type head mounted display. In this case, the image control unit 308 outputs display data for superimposing and displaying the information regarding the feature region on the foreground displayed in a transparent manner on the transmissive type head mounted display. Since the user can directly view the foreground, the user can execute work in a state closer to reality.

The training data holding unit 312 that holds trained training data may be further provided, and the training unit 313 may execute training on the trained inference model 314 using the training data held in the training data holding unit 312 and the training data generated by the training data generation unit 311. By executing training based on an existing inference model, it is possible to prevent erroneous determination in a specific situation while favorably executing existing region estimation.

The image control unit 308 may output the display data including the region selected by the region selection unit 310. Since the selected region is displayed similarly to the mark 805 in (d) of FIG. 17, the selected region can be checked.

The image control unit 308 may output the display data after enlarging or reducing the display data. When the defect is small or when it is desired to check the state of the component more carefully, the image can be enlarged and displayed. By displaying an image after reducing the image, it is possible to view the entire component from above.

The image control unit 308 may use the output of the inference model 314 as an evaluation value and output the display data including the evaluation value. By referring to the evaluation value of the inference model, the accuracy of estimation in the estimated regions can be checked. By referring to this evaluation value, it is possible to determine whether re-training is necessary.

The image receiving unit 305 may further receive image data obtained by capturing an image of a user's operation, and the image processing apparatus 300 may further include the operation control unit 306 that analyzes the image data obtained by capturing the image of the user's operation and outputs control information, and the region selection unit 310 may select a region based on the control information. For example, since the user can operate the image processing apparatus 300 by a hand gesture, a series of operations can be performed in a state in which the user wears the head mounted display 301.

The information receiving unit 304 may further receive line-of-sight information of the user from the head mounted display 301, and the region selection unit 310 may select a region based on the line-of-sight information. Since the line-of-sight input can be used as a part of the interface, an operation of region selection in a state in which the head mounted display 301 is worn is facilitated.

In the present embodiment, an image processing method is an image processing method for displaying an image on a head mounted display, and includes: a step of receiving image data obtained by capturing an image of a foreground of the head mounted display; a step of estimating a predetermined feature region based on the image data using an inference model of a neural network; a step of outputting information regarding the feature region; a step of selecting any region in the image data; a step of generating an image included in the selected region as training data; and a step of executing training using at least the generated training data to generate the inference model. Since inspection and training can be executed while referring to the image displayed on the head mounted display 301, work efficiency can be improved. It is possible to generate an inference model adapted to an actual environment by adding an object at an actual work site to training data.

In the present embodiment, an image processing program is an image processing program for causing a computer to execute an image processing method for displaying an image on a head mounted display, the image processing program causing the computer to execute: a step of receiving image data obtained by capturing an image of a foreground of the head mounted display; a step of estimating a predetermined feature region based on the image data using an inference model of a neural network; a step of outputting information regarding the feature region; a step of selecting any region in the image data; a step of generating an image included in the selected region as training data; and a step of executing training using at least the generated training data to generate the inference model. Since inspection and training can be executed while referring to the image displayed on the head mounted display 301, work efficiency can be improved. It is possible to generate an inference model adapted to an actual environment by adding an object at an actual work site to training data.

### REFERENCE SIGNS LIST

100: image processing apparatus
101: display device
102: image output unit
103: input device
104: operation input unit
105: training data generation unit
110: training data holding unit
120: training unit
130: global inference unit
131: feature extraction unit
132: extended pooling
133: point feature extraction unit
134: point probability inference unit
140: local inference unit
141: feature extraction unit
142: classification unit
200: image processing apparatus
210: image input unit
220: region division unit
230: image output unit
300: image processing apparatus
301: head mounted display
302: camera
303: input device
304: information receiving unit
305: image receiving unit
306: operation control unit
307: region estimation unit
308: image control unit
309: image output unit
310: region selection unit
311: training data generation unit
312: training data holding unit
313: training unit
314: trained inference model
400: foreground
401: eye
410: half mirror
411: liquid crystal display unit
412: gyro sensor
413: line-of-sight sensor
400, 600, 700, 1200: image
601: stand
602, 1201: component
611 to 613, 801, 802: mark
621 to 623: evaluation value
624: auxiliary information
630, 803: enlarged image
804, 1204: finger
805: neighboring region
806: button
901 to 904: region
1202: defect
1203: neighboring region
1205: defective region

## Claims

1. An image processing apparatus for performing region division on an image to be processed using a neural network, the image processing apparatus comprising:
a global inference unit configured to extract a global feature of an image to execute inference;
a local inference unit configured to extract a local feature of the image to execute inference; and
a training unit configured to execute semi-supervised learning in each of the global inference unit and the local inference unit using inference results of both the global inference unit and the local inference unit.

2. An image processing apparatus for performing region division on an image to be processed using a neural network, the image processing apparatus comprising:
a global inference unit configured to extract a global feature of an image to infer a prediction probability of each pixel constituting the image;
a local inference unit configured to extract a local feature of the image to infer a prediction probability of each pixel constituting the image; and
a training unit configured to execute semi-supervised learning in each of the global inference unit and the local inference unit using a cost function including a difference between the prediction probabilities inferred in the global inference unit and the local inference unit for each pixel.

3. The image processing apparatus according to claim 1 or 2, further comprising:
an image output unit configured to output an image to a display device; and
an operation input unit to which any point selected on the image and label information of the point are input,
wherein the training unit uses the image, coordinate information on the image of the selected point, and the label information as a training dataset of the global inference unit, and uses, as a training dataset of the local inference unit, a small image obtained by cutting out a part of the image including the selected point, and the label information.

4. The image processing apparatus according to claim 3,
wherein the training unit automatically generates coordinate information of any point on the image, and uses the automatically generated coordinate information as a training dataset of the global inference unit and the local inference unit.

5. The image processing apparatus according to claim 2,
wherein the cost function includes a loss function of the global inference unit, a loss function of the local inference unit, and an L2 regularization term.

6. An image processing apparatus for performing region division on an image to be processed using a neural network, the image processing apparatus comprising:
an image input unit configured to input the image to be processed;
a global inference unit configured to extract a global feature of an image to execute inference;
a local inference unit configured to extract a local feature of the image to execute inference;
a region division unit configured to execute semi-supervised learning in each of the global inference unit and the local inference unit using inference results of both the global inference unit and the local inference unit and to execute region division on the image to be processed using a trained inference model of the global inference unit; and
an image output unit configured to output the image subjected to the region division.

7. The image processing apparatus according to claim 3,
wherein the display device is a head mounted display, and
wherein a point selected by a hand gesture and label information of the point are input to the operation input unit.

8. An image processing apparatus for performing region division on an image to be processed using a neural network, the image processing apparatus comprising:
an image output unit configured to output an image to a display device;
an operation input unit to which any point selected on the image by a hand gesture and label information of the point are input; and
a training unit configured to train an inference model that extracts a feature of the image,
wherein the training unit uses the image, coordinate information on the image of the selected point, and the label information as training data of the inference model.

9. The image processing apparatus according to claim 8,
wherein the display device is a head mounted display, and
wherein the operation input unit receives an input operation from a gesture device configured to detect movement of a hand of an operator as a hand gesture.

10. The image processing apparatus according to claim 8 or 9, further comprising:
a training data generation unit configured to associate the label information with a point on the image designated by a hand gesture, and to generate training data based on the image, coordinate information on the image of the selected point, and the label information,
wherein the training unit trains the inference model using the training data generated by the training data generation unit.

11. The image processing apparatus according to claim 10, further comprising:
a region estimation unit configured to estimate a feature region of an image using the inference model; and
an image control unit configured to superimpose auxiliary information regarding the feature region of the image estimated by the region estimation unit on the image and to output the image to the display device.

12. The image processing apparatus according to claim 11,
wherein the auxiliary information includes information indicating an inference result obtained by the inference model.

13. The image processing apparatus according to claim 11,
wherein the image control unit enlarges or reduces a part of the superimposed image and outputs the enlarged or reduced image to the display device.

14. The image processing apparatus according to claim 12, further comprising:
a training data holding unit configured to hold trained training data,
wherein the inference model is a trained inference model that is trained using the training data held in the training data holding unit, and
wherein the training unit trains the trained inference model using both the training data held in the training data holding unit and the training data generated by the training data generation unit.

15. An image processing method for performing region division on an image to be processed using a neural network, the image processing method comprising:
a global inference step of extracting a global feature of an image to execute inference;
a local inference step of extracting a local feature of the image to execute inference; and
a training step of executing semi-supervised learning in each of the global inference step and the local inference step using inference results of both the global inference step and the local inference step.

16. An image processing program for causing a computer to perform an image processing method for performing region division on an image to be processed using a neural network, the image processing program causing the computer to perform:
a global inference step of extracting a global feature of an image to execute inference;
a local inference step of extracting a local feature of the image to execute inference; and
a training step of executing semi-supervised learning in each of the global inference step and the local inference step using inference results of both the global inference step and the local inference step.
